# FASCICULE DE BREVET EUROPEEN

(11) **EP 1 347 545 B1**
(45) Date de publication et mention de la délivrance du brevet: **20.05.2009**
(21) Numéro de dépôt: 03290551.5
(22) Date de dépôt: 07.03.2003
(51) Int. Cl.: H01S 3/067

(54) **Guide optique comportant un milieu amplificateur et un procédé de fabrication d'un tel guide**
Optischer Wellenleiter mit einem verstärkenden Medium und Verfahren zu seiner Herstellung
Optical waveguide comprising an amplifying medium and its manufacturing method

(30) Priorité: 18.03.2002 FR 0203311
(43) Date de publication de la demande: 24.09.2003
(73) Titulaire: Alcatel Lucent, 75008 Paris (FR)
(72) Inventeur: Gasca, Laurent, 91140 Villebon sur Yvette (FR); Pastouret, Alain, 91940 Les Ulis (FR); Moreau, Christine, 91120 Palaiseau (FR); Baniel, Pascal, 91210 Draveil (FR); Belouet, Christian, 92330 Sceaux (FR)
(74) Mandataire: Korakis-Ménager, Sophie

(56) Documents cités:
- WO-A-01/28946
- US-A- 5 717 517

## Description

La présente invention concerne le domaine des télécommunications optiques et plus précisément un guide optique comportant un milieu amplificateur, et un procédé de fabrication d'un tel guide.

Un guide utilisé pour constituer un amplificateur ou un laser, par exemple une fibre optique ou un guide planaire, comporte classiquement un milieu amplificateur comprenant :
- un coeur en une matrice d'un matériau transparent incorporant des éléments dopants actifs qui sont le siège du phénomène d'amplification tels que des ions métalliques de terres rares comme l'erbium,
- une gaine pour le guidage de la puissance lumineuse qui est majoritairement transmise par le coeur.

Ainsi, le brevet US-5717517 divulgue une fibre optique amplificatrice comportant un milieu amplificateur comprenant un coeur en une matrice principale d'un matériau transparent (verre ou polymère), et une gaine guidante entourant le coeur.

Des particules cristallines sont incorporées dans la matrice, chaque particule étant formée d'une matrice submicronique (forstérite, YAG, Ca₂SiO_{4,} ou encore LiGaO₂, LiAlO₂) distincte de la matrice principale et dopée par un ion métallique actif (V³⁺ ou Cr⁴⁺),

Cependant, cette fibre présente des pertes importantes par diffusion de la lumière, limitant ainsi ses performances optiques.

Le document WO-01/28946 décrit un guide optique comprenant un milieu amplificateur composé d'une matrice principale et de nanoparticules formées in-situ dans le verre de la matrice principale par croissance de nucléation.

La présente invention a pour premier objet de mettre au point un guide optique ayant des performances optiques optimisées (réduction des pertes optiques, augmentation du gain).

L'invention propose à cet effet un guide optique comportant un milieu amplificateur comprenant :
- un coeur en une matrice principale d'un matériau transparent, la matrice principale contenant des particules chacune formée d'une matrice submicronique distincte de la matrice principale et dopée par un élément actif métallique, l'élément actif étant absent de la matrice principale,
- une gaine guidante externe en contact avec le coeur,
caractérisé en ce que la taille des particules est inférieure à 20nm.

La taille des particules selon l'invention, réduite par rapport à celle des particules de l'art antérieur, permet non seulement de diminuer les pertes par diffusion mais également d'augmenter la concentration possible en particules dispersées dans la matrice, notamment afin d'augmenter le gain d'un amplificateur, tout en évitant le phénomène de 'quenching'. Ce phénomène intervient lorsque deux éléments dopants actifs, très proches l'un de l'autre voire formant des agrégats, interagissent entre eux jusqu'à annuler l'effet amplificateur.

Par ailleurs, suivant le procédé de fabrication choisi, les particules selon l'invention sont cristallines ou amorphes, leurs structures devant être en adéquation avec les performances recherchées.

Avantageusement, la matrice principale peut contenir plusieurs espèces de particules, les particules de différentes espèces étant distinctes entre elles par leur matrice submicronique distincte et/ou par leur élément actif distinct.

La matrice principale selon l'invention contient ainsi une variété de particules contrairement à l'art antérieur. En sélectionnant différentes matrices submicroniques pour un élément actif donné, l'invention rend possible la diversification de son environnement chimique local, et de préférence la diversification de ses proches voisins. Dès lors, la réponse spectrale de photoluminescence d'un élément actif va dépendre du choix de son environnement chimique et par exemple être décalée. De cette façon, la réponse totale résultant de la somme de ces réponses individuelles distinctes, il est possible de créer de nouvelles bandes spectrales grâce à l'invention.

Par ailleurs, l'emploi des particules comportant des éléments actifs distincts permet de couvrir davantage de bandes spectrales.

En somme, la nature des particules (choix couplé de l'élément voire des éléments actifs et de la matrice submicronique), leurs tailles (dans la limite des 20 nm), et leurs concentrations relatives dans la matrice principale sont ajustées de façon à fournir le profil souhaité de réponse totale.

Par ailleurs, la matrice submicronique selon l'invention peut être choisie parmi les matrices à base d'oxydes métalliques et les matrices à base de fluorures, d'oxyfluorures métalliques, de sulfures et de préférence parmi le groupe des matrices à base de silice et des matrices contenant les ions La³⁺ et/ou Al³⁺, ions à placer avantageusement dans l'environnement atomique proche de l'élément métallique actif.

De préférence, l'élément actif métallique peut être choisi parmi les ions de terres rares et les ions de métaux de transition et de préférence parmi les ions d'erbium, d'ytterbium, de thulium et les ions Cr⁴⁺ et Mn³⁺.

En outre, le matériau transparent peut être choisi parmi les matériaux vitreux et les polymères et de préférence parmi les verres de silice, les polycarbonates, les polyméthacrylates de méthyle et les polymères fluorés. Avantageusement, le guide optique selon l'invention peut être choisi parmi une fibre optique et un guide planaire.

La présente invention a pour autre objet la mise au point d'un procédé de fabrication fiable d'un guide optique tel que décrit précédemment.

L'invention propose ainsi un procédé de fabrication d'un guide optique selon la revendication 7.

L'étape de préparation des particules selon l'invention est découplée de l'étape de préparation du précurseur de la matrice principale. Cela permet de mieux maîtriser la fabrication de ces particules et en particulier leur environnement chimique local en choisissant une matrice submicronique appropriée distincte de la matrice principale. L'élément actif métallique est ainsi absent de la matrice principale.

La synthèse chimique et l'ablation laser permettent de choisir et de contrôler la taille et la nature des particules fabriquées.

Lorsque plusieurs espèces de particules sont fabriquées durant l'étape de préparation, l'incorporation des différentes espèces dans le précurseur peut être réalisée simultanément ou séquentiellement.

La synthèse chimique selon l'invention peut comprendre une étape de fabrication de type sol-gel de précurseurs organométalliques desdites particules incluant l'élément actif, suivie d'une étape de formation de gouttelettes organométalliques par vaporisation des précurseurs organométalliques, et d'une étape de transformation des gouttelettes en particules selon l'invention par élimination des éléments organiques.

L'étape de fabrication de type sol-gel peut comprendre :
- le mélange, dans un solvant de type alcool, d'un composé contenant le métal de l'élément actif avec des monomères de type sol-gel comprenant chacun un composé complexant organique lié à un premier alcoxyde de métal,
- la formation de noyaux organométalliques par une complexation du métal de l'élément actif,
- la croissance desdits noyaux organométalliques en des composés organométalliques par ajout de deuxièmes alcoxydes de métal réagissant avec les premiers alcoxydes,
- la réticulation de la structure desdits composés par réaction de type sol-gel intramoléculaire pour former lesdits précurseurs organométalliques.

L'environnement chimique local des éléments actifs va dépendre principalement du choix des métaux des premiers et deuxièmes alcoxydes de métal.

Les premiers et deuxièmes alcoxydes de métal selon l'invention peuvent être choisis de préférence parmi les alcoxydes de silicium et d'aluminium, et le composé complexant organique peut être choisi parmi les atomes ou groupes d'atomes donneurs d'électrons et de préférence les amines, les acétates, les béta-dicétonates, les thiols et les éthers.

Par ailleurs, l'ablation laser selon l'invention peut comprendre une étape d'éjection d'atomes par irradiation d'une cible dopée par lesdits éléments actifs, choisie parmi les cibles de composition sensiblement identique auxdites particules, suivie d'une étape de formation desdites particules par condensation sous pression gazeuse des atomes éjectés.

De manière avantageuse, les cibles selon l'invention peuvent être choisies parmi les oxydes métalliques dopés et les fluorures métalliques dopés et de préférence Al₂O₃ dopé par des ions d'erbium, Sb₂O₃ dopé par des ions de thulium, LaF₃ dopé par des ions d'erbium, Y₂O₃ dopé des ions d'erbium et ZnO dopé.

L'étape d'incorporation des particules peut être choisie parmi une étape d'imprégnation dudit précurseur de la matrice principale, une étape de dépôt chimique en phase vapeur sur ledit précurseur et une étape de type mélange dans le précurseur.

Le procédé selon l'invention peut en outre comprendre une étape de formation dudit précurseur de la matrice principale par un dépôt sur au moins une partie de gaine, choisi de préférence parmi les dépôts chimiques en phase vapeur et les dépôts par centrifugation.

Les dépôts chimiques en phase vapeur, et plus précisément en phase vapeur modifiée, sont utilisés par exemple pour la fabrication des fibres optiques.

Les dépôts par centrifugation sont notamment utilisés pour réaliser les couches en polymères d'un guide planaire.

Les caractéristiques et objets de la présente invention ressortiront de la description détaillée donnée ci-après en regard des figures annexées, présentées à titre illustratif et nullement limitatif.

Dans ces figures :
- la figure 1 représente une vue schématique de côté d'une fibre optique amplificatrice selon l'invention,
- la figure 2 représente une vue schématique en coupe d'un guide planaire selon l'invention utilisé comme amplificateur,
- la figure 3 montre schématiquement une étape de préparation d'une particule selon l'invention par synthèse chimique,
- la figure 4 montre schématiquement une étape de préparation de particules selon l'invention par ablation laser,
- la figure 5 montre schématiquement une étape d'incorporation desdites particules selon l'invention dans un précurseur de la matrice principale d'une fibre optique amplificatrice selon l'invention.

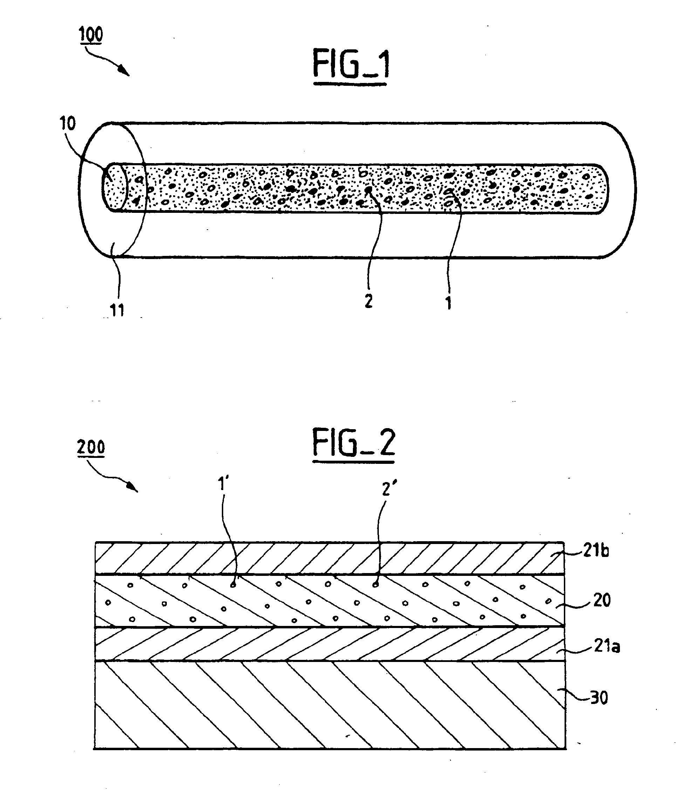

On a représenté en figure 1 une vue schématique de côté d'une fibre optique amplificatrice 100 selon l'invention utilisée comme amplificateur ou comme laser.

La fibre optique 100 comporte un milieu amplificateur comprenant :
- un coeur 10 en une matrice principale d'un matériau vitreux transparent tel qu'un silicate, la matrice principale contenant deux espèces de particules 1, 2, les particules étant formées d'une matrice submicronique à base d'Al₂O₃ et de Sb₂O₃ dopée par des ions d'erbium et d'une matrice submicronique à base d'Y₂O₃ dopée par des ions de thulium respectivement,
- une gaine guidante 11 externe en contact avec le coeur 10, par exemple en un matériau de type germano ou phosphosilicate contenant du fluor ou du bore comme élément permettant d'abaisser son indice de réfraction.

Selon l'invention, la taille des particules 1, 2 est inférieure à 20 nm. En outre, la différence d'indice entre les particules et la matrice principale est inférieure à 0,6 de préférence.

On a représenté en figure 2 une vue schématique en coupe d'un guide planaire 200 selon l'invention utilisé comme amplificateur.

Le guide planaire 200 comporte un milieu amplificateur comprenant trois couches 21a, 20, 21b successivement déposées sur un substrat 30 en silicium. La couche 20 correspondant au coeur est située entre les deux couches 21a, 21b en polymères de type époxy ou acrylique correspondant à la gaine guidante.

Le coeur est en une matrice principale d'un polymère transparent par exemple à 1,55 µm tel que le Poly[Bisphenol A carbonate-co-4,4'-(3,3,5 trimethylcyclohexylidene) diphenol carbonate] amorphe (APC) de la société Aldrich, le polyméthacrylate de méthyle (PMMA), un polymère fluoré de type polyimide.

La matrice principale contient deux espèces de particules 1', 2'. Les particules 1', 2' sont respectivement formées d'une matrice submicronique à base d'Al₂O₃ dopée par des ions d'erbium et d'une matrice submicronique base d'Y₂O₃ dopée par des ions de thulium.

Selon l'invention, la taille des particules 1', 2' est inférieure à 20 nm. En outre, la différence d'indice entre les particules et la matrice principale est inférieure à 0,6 de préférence.

A titre d'exemple, si l'on souhaite des pertes optiques inférieures à 1 dB dans un coeur de 5 µm et d'indice de réfraction de l'ordre de 1,5, les pertes par diffusion Rayleigh doivent être limitées à 0,01 dB/m pour une fibre longue (de cent mètres environ), 0,1 dBm pour une fibre courte (dix mètres environ) ou encore 10 dB/m pour un guide planaire (0,1 mètre environ).

Des pertes inférieures à 0,01 dB/m sont obtenues en utilisant des particules selon l'invention de 5 nm à la concentration de 1% en poids atomique avec une différence d'indice de réfraction entre 0,1 et 0,2 ou à la concentration de 0,1% en poids atomique pour une différence d'indice de réfraction entre 0,1 et 0,5.

Des pertes inférieures à 0,1 dB/m sont obtenues en utilisant des particules selon l'invention de 10 nm à la concentration de 1% en poids atomique avec une différence d'indice de réfraction entre 0,1 et 0,2 ou à la concentration de 0,1% en poids atomique pour une différence d'indice de réfraction entre 0,1 et 0,5.

La limite des 10 dB/m n'est pas atteinte en utilisant des particules selon l'invention de 10 nm à la concentration de 1% en poids atomique avec une différence d'indice de réfraction entre 0,1 et 0,5.

De préférence, on choisira un dopage faible, par exemple de l'ordre de 0,1% en poids, pour les fibres longues, et un dopage plus élevé pour les fibres courtes ou les guides planaires, par exemple supérieur à 1% en poids.

Les particules selon l'invention peuvent être préparées par synthèse chimique. La synthèse chimique comprend d'abord une étape de fabrication de type sol-gel de précurseurs organométalliques des particules incluant l'élément actif, obtenus sous la forme d'une solution ou d'une suspension stable dans un solvant de type alcool. Ensuite, est réalisée une étape de formation de gouttelettes organométalliques par vaporisation des précurseurs organométalliques, obtenue par la nébulisation de la solution ou de la suspension contenant les précurseurs. Succède alors une étape de transport des gouttelettes, par l'intermédiaire d'un gaz vecteur inerte, suivie d'une étape de transformation des gouttelettes en particules selon l'invention par élimination des éléments organiques.

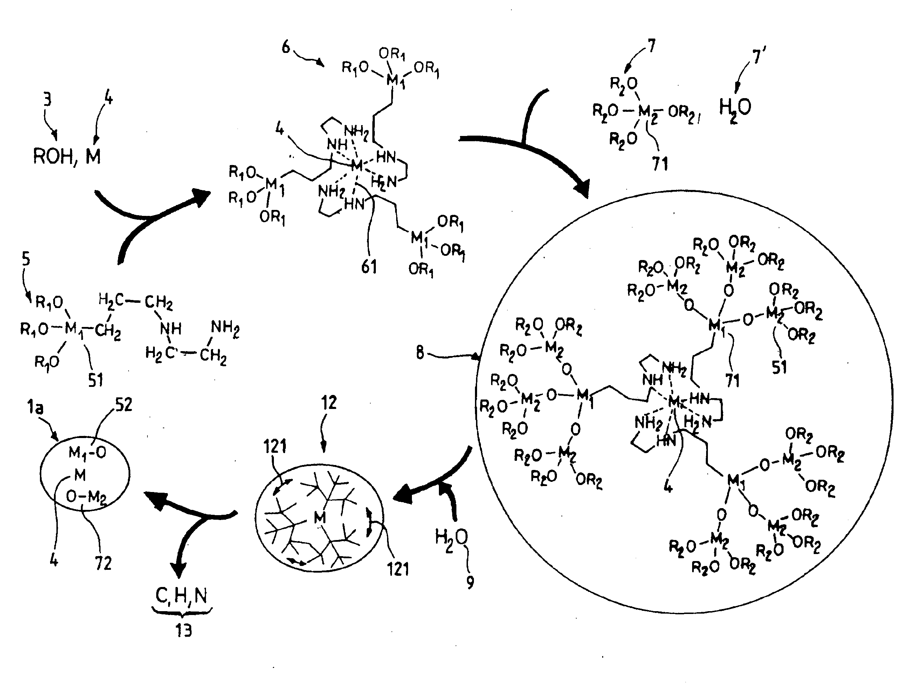

La figure 3 montre schématiquement une étape de préparation d'une particule selon l'invention la par une telle synthèse chimique.

L'étape de fabrication de type sol-gel comprend d'abord le mélange dans 200 ml environ d'un solvant 3 de type alcool, de 6 10⁻³ mole environ d'un composé contenant le métal 4 de l'élément actif et de 18 10⁻³ mole environ de monomères 5 de type sol-gel.

Le solvant 3 est de formule R-OH, par exemple l'éthanol.

Le composé contenant le métal 4 formant l'élément actif tel que l'erbium est un acétylacétonate d'erbium ou un acétate d'erbium.

Chaque monomère de type sol-gel 5 est de formule (R₁O)₃M₁-(CHR'₁)ₐ-A dans laquelle :
- le groupe (R₁O)₃M₁ est le premier alcoxyde de métal selon l'invention avecR₁ chaîne alkyle comprenant de 1 à 8 atomes,
- le groupe (CHR'₁)ₐ contient un atome d'hydrogène ou une chaîne alkyle R'₁ comprenant 1 à 4 atomes de carbone, a étant un nombre entier de 1 à 4,
- A est un complexant organique contenant un atome ou un groupe d'atomes aptes à donner des électrons, tels que les amines.

De préférence, le monomère est de formule (R₁O)₃M₁-(CH₂)₃-NH-(CH₂)₂-NH₂ comme illustré en figure 3, ou de formule (R₁O)₃M₁-(CH₂)₃-NH₂.

En outre, R₁ est avantageusement identique au groupe R du solvant 3 et le métal 51 du premier alcoxyde de métal est de préférence un atome de silicium.

A partir de ce mélange, intervient la complexation du métal 4 conduisant à la formation d'un noyau organométallique 6, dissout dans le solvant 3. Le métal 4 est ainsi associé à chaque atome d'azote par une liaison 61 de type donneur - accepteur d'électrons.

On ajoute dans ce milieu contenant le noyau organométallique 6 54 10⁻³ mole d'un deuxième alcoxyde de métal 7 de formule (R₂O)₄M₂ si le métal est tétravalent, comme illustré en figure 3, ou de formule (R₂O)₃M₂ si le métal est trivalent.

On ajoute également 1 g d'eau distillée 7' de façon à produire une réaction d'hydroiyse/condensation de type sol-gel entre le premier et le deuxième alcoxyde de métal à une température comprise entre 40°C et la température d'ébullition du solvant 3, de préférence à une température de l'ordre de 70-75°C lorsque le solvant 3 est de l'éthanol.

Dans une variante, l'étape d'hydrolyse peut être avantageusement dissociée de l'étape de condensation en fonction de la différence de réactivité entre le premier alcoxyde et le deuxième alcoxyde de métal qui dépend de la nature des métaux M₁ et M₂.

Dans une première configuration de cette variante, la quantité d'eau nécessaire à l'hydrolyse est additionnée, à une température comprise entre 30°C et 70°C, de préférence de l'ordre de 50°C, dans le milieu afin de former les liaisons M₁OH capables de réagir sur le deuxième alcoxyde ajouté ensuite.

De cette façon, le noyau organométallique 6 croît jusqu'à former un un composé organométallique 8 par réaction entre premiers et deuxièmes alcoxydes notamment du type :

M₁OH+RO-M₂→M₁-O-M₂+ROH

Dans une deuxième configuration de cette variante, la quantité d'eau nécessaire à l'hydrolyse est additionnée, à une température comprise entre 30°C et 70°C, de préférence de l'ordre de 50°C, au deuxième alcoxyde 7 afin de former les liaisons M₂OH avant insertion dans le milieu.

De cette façon, le noyau organométallique 6 croît jusqu'à former un un composé organométallique 8 par réaction entre premiers et deuxièmes alcoxydes notamment du type :

M₁OR+OH-M₂→M₁-O-M₂+ROH

En outre, R₂ est avantageusement identique au groupe R du solvant 3 et le métal 71 du deuxième alcoxyde de métal 7 est de préférence un atome de silicium ou un atome d'aluminium.

Avantageusement, le deuxième alcoxyde 7 peut être un complexe hétérométallique, par exemple de type aluminosilicate, auquel cas le métal M₂ est de l'aluminium et le groupe OR₂ du deuxième alcoxyde 7 est de la forme OSi(OR₁)₃.

Un rajout du solvant 3 (étape non représentée) permet ensuite de diluer le composé organométallique 8 en limitant, par dispersion, les réactions entre composés organométalliques.

Ensuite une étape de réticulation de la structure du composé 8 est réalisée par ajout sous stoechiométrique d'eau 9 par rapport au nombre de liaisons M₂OR₂ contenues dans le composé 8. Les deuxièmes alcoxydes 7 voisins réagissent entre eux (comme symbolisé par les flèches 121) pour former, en suspension, le composé organométallique 12 précurseur d'une particule selon l'invention. On peut additionner un catalyseur de type ammoniaque pour faciliter cette réaction de réticulation.

L'addition d'un cosolvant tel que l'acétylacétone ou un acétate organique (étape non représentée) permet d'éviter la formation d'agrégats de précurseurs organométalliques 12. Une filtration peut aussi être réalisée à ce niveau de manière à éliminer d'éventuels agrégats de précurseurs 12.

Sous l'action d'un nébuliseur, dispositif à ultrasons ou atomiseur par exemple, cassant la surface du milieu liquide, des gouttelettes contenant le précurseur 12 sont éjectées du milieu (étape non représentée).

Une étape dite de 'cracking', réalisée à un température de l'ordre de 500°C consiste ensuite à transformer chaque gouttelette contenant le précurseur 12 en une particule 1a, par élimination des éléments organiques 13.

L'élément actif 4 est ainsi entouré d'oxydes des métaux 52, 72 provenant des premiers et deuxièmes alcoxydes de métal.

La taille des particules, inférieure à 20 nm, est prédéterminée en ajustant la quantité de deuxième alcoxyde 7 additionnée en fonction de la taille souhaitée pour le composé 8. Ainsi, un deuxième niveau de croissance nécessitera l'ajout de 162 10⁻³ mole de deuxième alcoxyde 7 et d'environ 3 g d'eau alors qu'un troisième niveau nécessitera l'ajout de 486 10⁻³ mole de deuxième alcoxyde et d'environ 9 g d'eau.

A titre indicatif, un composé 8 obtenu après le troisième niveau de croissance conduira à une particule selon l'invention ayant un diamètre de l'ordre de 7 nm.

Une particule selon l'invention peut aussi être préparée par ablation laser.

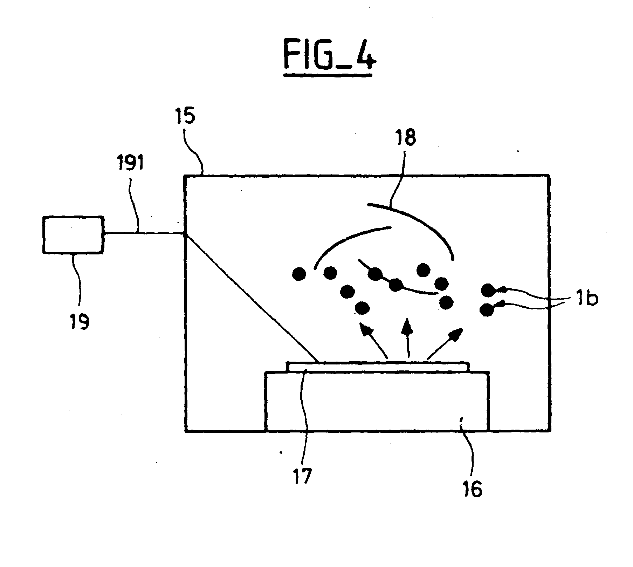

Ainsi, la figure 4 montre schématiquement une étape de préparation de particules selon l'invention 1b par ablation laser.

L'ablation laser est réalisée dans une chambre 15, sous une pression de 1 à 100 mbar environ d'un gaz neutre de type azote 18 pulsé ou statique, et dans laquelle une cible 17 par exemple de Y₂O₃ dopée par de l'erbium repose sur un support 16.

Un laser pulsé à excimère 19 produit un faisceau UV 191 par exemple à la longueur d'onde de 248 nm, avec une durée d'impulsion à mi-hauteur de l'ordre de la dizaine de nanosecondes (typiquement 25 ns), à une fréquence de répétition des impulsions de 5 à 100 Hz environ et de densité de puissance élevée de l'ordre de 10 à 100 MW/cm². Ce faisceau 191 irradie la cible 17 et provoque ainsi l'éjection d'atomes ou de groupe d'atomes qui interagissent avec le gaz neutre par collisions et se condensent jusqu'à former les particules 1b.

La taille des particules, inférieure à 20 nm, est prédéterminée en ajustant la densité de puissance et la pression gazeuse en fonction de la nature de la cible.

En outre, une ou plusieurs autres cibles (non représentées) peuvent être placées sur le support 16 par exemple rotatif pour la fabrication de plusieurs espèces de particules.

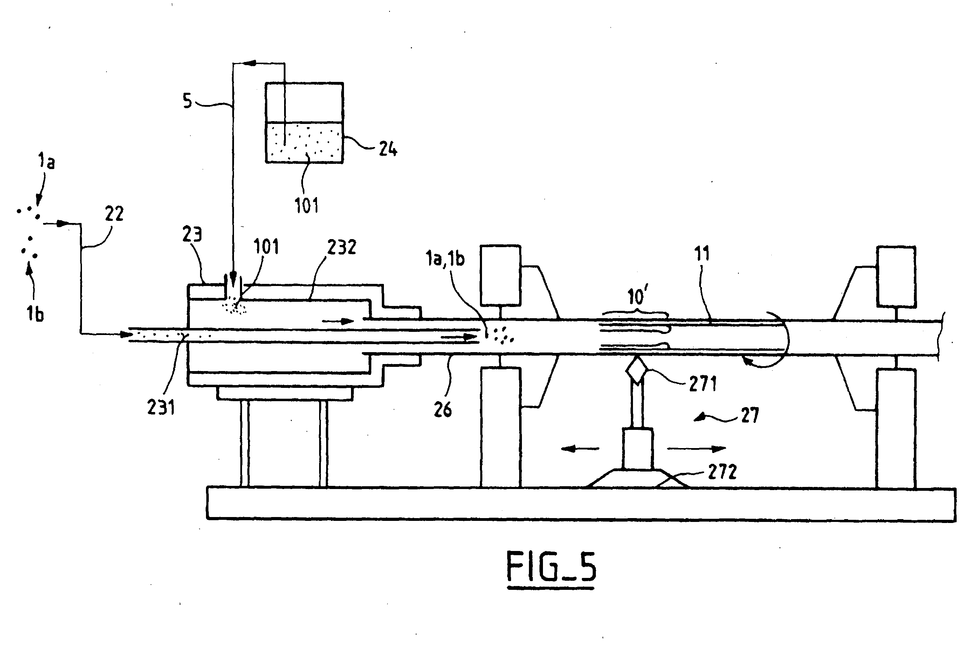

La figure 5 montre schématiquement une étape d'incorporation des particules 1a, 2b dans un précurseur 10' de la matrice principale du coeur d'une fibre optique amplificatrice selon l'invention du type de celle présentée en figure 1.

Après leur fabrication par synthèse chimique et par ablation laser respectivement, les particules 1a, 1b sont transportées simultanément ou successivement à l'aide d'un gaz d'entraînement 22 dans une enceinte 23 comprenant un tube 231 d'acheminement des particules à l'emplacement des moyens 27 de dépôt chimique en phase vapeur modifiée dit MCVD (Modified Chemical Vapor Deposition Process en anglais).

Par ailleurs, un milieu liquide 24 contient des éléments 101 destinés à former le précurseur 10' de la matrice principale tels que SiCl₄, GeCl₄, POCl₃. Ces éléments 101 sont vaporisés au moyen d'un saturateur 10 dans l'enceinte 23 comprenant un tube 232 d'acheminement de ces éléments à l'emplacement des moyens 27 de dépôt chimique en phase vapeur modifiée.

Les moyens 27 sont constitués d'un chalumeau 271 mobile le long d'un tube de silice en rotation 26 par un dispositif support de translation 272. Ces moyens permettent ainsi des dépôts à l'intérieur du tube 26 par thermophorèse.

Dans un premier mode de réalisation, les éléments 101 constituant le précurseur de la matrice principale sont déposés par MCVD à une température de l'ordre de 1500°C à 1700°C sur la surface interne de la gaine 11 disposée dans le tube 26 formant ainsi le précurseur 10' sous la forme d'une couche poreuse qui est ensuite recouverte par une couche (non représentée) contenant les particules 1a, 1b également déposée par MCVD à une température minimale de 1300°C.

Dans une première variante de ce mode, les éléments constituant le précurseur et les particules sont déposés en plusieurs fois et en alternance formant alors un empilement de couches.

Dans une deuxième variante de ce mode, les éléments constituant le précurseur et les particules sont déposés simultanément.

Dans un autre de mode de réalisation (non représenté), les particules selon l'invention peuvent être incorporées dans le précurseur de la matrice principale du coeur par imprégnation. Dans ce mode, les particules sont contenues dans un liquide amené au contact de la surface interne poreuse du précurseur pendant le temps nécessaire au liquide pour imprégner la couche interne, généralement une heure au minimum.

Avantageusement, une étape de séchage de la couche poreuse de la matrice dopée par les particules selon l'invention peut être opérée sous un courant de Cl₂ et/ou O₂ à une température comprise entre 1000°C et 1300°C à la suite du dépôt, afin d'éliminer toute trace de résidu organique sous la forme de vapeur d'eau et de CO₂.

Surviennent ensuite les étape classiques de formation de la préforme de la fibre, par des traitements thermiques appropriés, et d'étirage de la préforme pour constituer la fibre selon l'invention.

Par ailleurs, un guide planaire tel qu'illustré en figure 2 est fabriqué par dépôts successifs par centrifugation. Ce type de dépôt consiste à revêtir un substrat donné d'une couche à l'aide d'un appareil produisant un mouvement giratoire ultrarapide permettant l'étalement régulier de la couche sur le substrat. Dans ce cas, l'incorporation des particules est réalisée préalablement au dépôt de la couche coeur par simple mélange dans le précurseur de la matrice principale.

Bien entendu, la description qui précède a été donnée à titre purement illustratif. On pourra sans sortir du cadre de l'invention remplacer tout moyen par un moyen équivalent.

Les particules selon l'invention peuvent dans certains cas être délibérément incorporées dans la gaine.

Une étape de stockage des particules par exemple, dans un solvant, est possible avant leur incorporation.

## Revendications

1. Guide optique (100, 200) comportant un milieu amplificateur comprenant :
- un coeur (10, 20) en une matrice principale d'un matériau transparent, la matrice principale contenant des particules (1, 2, 1', 2'), chaque particule étant formée d'une matrice submicronique distincte de la matrice principale et dopée par un élément actif métallique, l'élément actif étant absent de la matrice principale, et
- une gaine guidante externe (11, 21) en contact avec le coeur,
**caractérisé en ce que** la taille des particules (1, 2, 1', 2') est inférieure à 20 nm.

2. Guide optique (100, 200) selon la revendication 1 **caractérisé en ce que** la matrice principale contient plusieurs espèces desdites particules, les particules de différentes espèces étant distinctes entre elles par leur matrice submicronique distincte et/ou par leur élément actif distinct.

3. Guide optique (100, 200) selon l'une des revendications 1 ou 2 **caractérisé en ce que** la matrice submicronique est choisie parmi les matrices à base d'oxydes métalliques et les matrices à base de fluorures, d'oxyfluorures métalliques, de sulfures et de préférence parmi les matrices à base de silice et des matrices contenant les ions La³⁺ et/ou Al³⁺.

4. Guide optique (100, 200) selon l'une des revendications 1 à 3 **caractérisé en ce que** l'élément actif métallique est choisi parmi les ions de terres rares et les ions de métaux de transition et de préférence parmi les ions d'erbium, d'ytterbium, de thulium et les ions Cr⁴⁺ et Mn³⁺.

5. Guide optique (100, 200) selon l'une des revendications 1 à 4 **caractérisé en ce que** le matériau transparent est choisi parmi les matériaux vitreux et les polymères et de préférence parmi les verres de silice, les polycarbonates, les polyméthacrylates de méthyle et les polymères fluorés

6. Guide optique (100, 200) selon l'une des revendications 1 à 5 **caractérisé en ce qu'**il est choisi parmi une fibre optique et un guide planaire.

7. Procédé de fabrication d'un guide optique comportant un milieu amplificateur comprenant :
- un coeur en une matrice principale d'un matériau transparent, la matrice principale contenant des particules (1a, 1b), chacune formée d'une matrice submicronique distincte de la matrice principale et dopée par un élément actif métallique, l'élément actif étant absent de la matrice principale, et
- une gaine guidante externe (11) en contact avec le coeur,
**caractérisé en ce qu'**il comprend
- une étape de préparation desdites particules (1a, 1b) choisie parmi la synthèse chimique et l'ablation laser,
- une étape d'incorporation desdites particules dans un précurseur (10') de la matrice principale,
et **en ce que** la taille desdites particules (1a, 1b) est inférieur à 20nm.

8. Procédé de fabrication d'un guide selon la revendication 7 **caractérisé en ce que** la synthèse chimique comprend une étape de fabrication de type sol-gel de précurseurs organométalliques (12) desdites particules (1a) incluant l'élément actif (4), suivie d'une étape de formation de gouttelettes organométalliques par vaporisation des précurseurs organométalliques et d'une étape de transformation des gouttelettes en particules (1a) par élimination des éléments organiques.

9. Procédé de fabrication d'un guide selon la revendication 8 **caractérisé en ce que** l'étape de fabrication de type sol-gel comprend :
- le mélange, dans un solvant (3) de type alcool, d'un composé contenant le métal (4) de l'élément actif avec des monomères de type sol-gel (5) comprenant chacun un composé complexant organique lié à un premier alcoxyde de métal,
- la formation de noyaux organométalliques (6), par une complexation du métal de l'élément actif,
- la croissance des noyaux organométalliques en des composés organométalliques (8) par ajout de deuxièmes alcoxydes de métal (7) réagissant avec les premiers alcoxydes,
- la réticulation de la structure desdits composés par réaction de type sol-gel intramoléculaire pour former lesdits précurseurs (12) organométalliques.

10. Procédé de fabrication d'un guide selon la revendication 9 **caractérisé en ce que :**
- les premiers et deuxièmes alcoxydes de métal sont choisis parmi les alcoxydes de silicium et d'aluminium,
- le composé complexant organique est choisi parmi les atomes ou groupes d'atomes donneurs d'électrons et de préférence les amines, les acétates, les béta-dicétonates, les thiols et les éthers.

11. Procédé de fabrication d'un guide selon la revendication 7 **caractérisé en ce que** l'ablation laser comprend une étape d'éjection d'atomes par irradiation d'une cible (17) dopée par lesdits éléments actifs, choisie parmi les cibles de composition sensiblement identique auxdites particules (1b), suivie d'une étape de formation desdites particules par condensation sous pression gazeuse (18) des atomes éjectés.

12. Procédé de fabrication d'un guide selon la revendication 11 **caractérisé en ce que** les cibles (17) sont choisies parmi les oxydes métalliques dopés et les fluorures métalliques dopés et de préférence Al₂O₃ dopé par des ions d'erbium, Sb₂O₃ dopé par des ions de thulium, LaF₃ dopé par des ions d'erbium, Y₂O₃ dopé par des ions d'erbium et ZnO dopé.

13. Procédé de fabrication d'un guide selon l'une des revendications 7 à 12 **caractérisé en ce que** l'étape d'incorporation des particules (1a, 1b) est choisie parmi une étape d'imprégnation dudit précurseur de la matrice principale, une étape de dépôt chimique en phase vapeur sur ledit précurseur et une étape de type mélange dans le précurseur.

14. Procédé de fabrication d'un guide selon l'une des revendications 7 à 13 **caractérisé en ce qu'**il comprend une étape de formation dudit précurseur (10') de la matrice principale par un dépôt sur au moins une partie de la gaine (11), choisi de préférence parmi les dépôts chimiques modifiés en phase vapeur et les dépôts par centrifugation.

## Claims

1. An optical waveguide (100, 200) comprising a gain medium comprising:
- A core (10 20) formed of a main matrix of a transparent material, the main matrix containing particles (1, 2, 1', 2'), each particle being formed of a submicronic matrix distinct from the main matrix and doped with a metallic active element, the active element being absent from the main matrix, and
- An external guiding sheath (11, 21) in contact with the core,
**characterized in that** the size of the particles (1, 2, 1', 2') is less than 20 nm.

2. An optical waveguide (100, 200) according to claim 1, **characterized in that** the main matrix contains multiple species of said particles, the particles of different species being distinct from another by way of their distinct submicronic matrices, and/or by way of their distinct active elements.

3. An optical waveguide (100, 200) according to one of claims 1 or 2, **characterized in that** the submicronic matrix is chosen from among metal oxide-based matrices and fluoride-based, metal oxyfluoride-based, and sulfide-based matrices, and preferentially from among silicon-based matrices containing La³⁺ and/or Al³⁺ ions.

4. An optical waveguide (100, 200) according to one of claims 1 to 3, **characterized in that** the metal active element is chosen from among rare-earth ions and transitional metal ions, and preferentially from among erbium, ytterbium, and thulium ions and Cr⁴⁺ and Mn³⁺ ions

5. An optical waveguide (100, 200) according to one of claims 1 to 4, **characterized in that** the transparent material is chosen from among glass materials and polymers, and preferentially from among silica glass materials, polycarbonates, methyl polymethacrylates and fluorinated polymers.

6. An optical waveguide (100 200) according to one of claims 1 to 5, **characterized in that** it is chosen from among an optical fiber and a planar waveguide.

7. An optical waveguide manufacturing method comprising a gain medium comprising:
- A core formed of a main matrix of a transparent material, the main matrix containing particles (1a,1b), each particle being formed of a submicronic matrix distinct from the main matrix and doped with a metallic active element, the active element being absent from the main matrix, and
- An external guiding sheath (11) in contact with the core,
**characterized in that** it comprises
- A step of preparing said particles (1a, 1b) chosen from among chemical synthesis and laser ablation,
- A step of incorporating said particles into a precursor (10') of said main matrix,
and **in that** tho size of the particles (1a, 1b) is less than 20 nm.

8. A waveguide manufacturing method according to claim 7, **characterized in that** the chemical synthesis comprises a step of sol-gel manufacturing of organometallic precursors (12) of said particles (1a) including the active element (4), followed by a step of forming organometallic droplets by spraying the organometallic precursors, and a step of converting the droplets into particles (1a) by eliminating the organic elements.

9. A waveguide manufacturing method according to claim 8, **characterized in that** the step of sol-gel manufacturing comprises.
- Mixing, within an alcohol solvent (3), a compound containing the metal (4) of the active element with sol-gel monomers (5) each comprising an organic complexing compound bound to a first metal alkoxide.
- Forming organometallic cores (6) by complexing the metal of the active element,
- Growing organometallic cores into organometallic compounds (8) by adding second metal alkoxides (7) that react with the first alkoxides,
- Cross-linking the structures of said compounds through an intra-molecular sol-gel reaction in order to form said organometallic precursors (12)

10. A waveguide manufacturing method according to claim 9 **characterized in that**
- The first and second metal alkoxides are chosen from among silicon alkoxides and aluminum alkoxides,
- The organic complexing compound is chosen from among the electron-donor atoms or groups of atoms, and preferentially from among amines, acetates, beta-dicetonates, thiols, and ethers.

11. A waveguide manufacturing method according to claim 7, **characterized in that** the laser ablation comprises a step of ejecting atoms by irradiating a target (17) doped with said active elements, chosen from among targets having a composition roughly identical to said particles (1b), followed by a step of forming said particles by condensing the ejected atoms under gas pressure (18).

12. A waveguide manufacturing method according to claim 11 **characterized in that** the targets (17) are chosen from among doped metal oxides and doped metal fluorides, and preferentially Al₂O₃, doped by erbium ions, Sb₂O₃ doped by thulium ions, LaF3 doped by erbium ions, Y₂O₃ doped by erbium ions and doped ZnO

13. A waveguide manufacturing method according to one of claims 7 to 12, **characterized in that** the step of incorporating particles (1a, 1b) is chosen from among a step of impregnating said precursor of the main matrix, a step of chemical vapor deposition onto said precusor, and a step of mixing within the precursor

14. A waveguide manufacturing method according to one of claims 7 to 13, **characterized in that** it comprises a step of forming said precursor (10') of the main matrix by deposition onto at least one part of the sheath (11), preferentially chosen from among modified chemical vapor deposition techniques and centrifuge deposition techniques.

## Patentansprüche

1. Optischer Wellenleiter (100, 200) mit einem verstärkenden Medium, umfassend:
- Einen Kern (10, 20) aus einer Hauptmatrix aus einem transparenten Material, wobei die Hauptmatrix Partikel (1, 2, 1', 2') enthält, wobei jedes Partikel aus einer sich von der Hauptmatrix unterscheidenden submikronen Matrix, welche mit einem aktiven Metallelement dotiert ist, besteht, wobei das aktive Element nicht auf der Hauptmatrix vorhanden ist, und
- eine leitende Ummantelung (11, 21), welche mit dem Kern in Berührung ist,
**dadurch gekennzeichnet, dass** die Größe der Partikel (1, 2, 1', 2') kleiner als 20 nm ist.

2. Optischer Wellenleiter (100, 200) nach Anspruch 1, **dadurch gekennzeichnet, dass** die Hauptmatrix mehrere Sorten der besagten Partikel enthält, wobei sich die Partikel verschiedener Sorten durch ihre verschiedene submikrone Matrix und/oder ihr verschiedenes aktives Element voneinander unterscheiden

3. Optischer Wellenleiter (100, 200) nach einem der Ansprüche 1 oder 2, **dadurch gekennzeichnet, dass** die submikrone Matrix unter den Matrizen auf Metalloxid-Basis und den Matrizen auf Fluorid-, Metalloxyfluorid- oder Sulfid-Basis und vorzugsweise unter den Matrizen auf Kieselglas-Basis und Matnzen, welche die Ionen La³⁺ und/oder Al³⁺ enthalten, gewählt wird.

4. Optischer Wellenleiter (100, 200) nach einem der Ansprüche 1 bis 3, **dadurch gekennzeichnet, dass** das aktive Metallelement unter den Ionen der Seltenen Erden und den Ionen von Ubergangsmetallen und vorzugsweise unter den Erbium-, Ytterbium-, Thulium-lonen und den Ionen Cr⁴⁺ und/oder Mn³⁺ gewählt wird

5. Optischer Wellenleiter (100, 200) nach einem der Ansprüche 1 bis 4, **dadurch gekennzeichnet, dass** das transparente Material unter den glasigen Materialien und den Polymeren und vorzugsweise unter den Kieselglasen, den Polycarbonaten, den Polymethylmethacrylaten und den fluorierten Polymeren gewählt wird.

6. Optischer Wellenleiter (100, 200) nach einem der Ansprüche 1 bis 5, **dadurch gekennzeichnet, dass** er unter einer optischen Faser und einem planaren Wellenleiter gewählt wird.

7. Verfahren zur Herstellung eines optischen Wellenleiters mit einem verstärkenden Medium, umfassend:
- Einen Kern (10, 20) aus einer Hauptmatrix aus einem transparenten Material, wobei die Hauptmatrix Partikel (1a, 1 b) enthält, wobei jedes Partikel aus einer sich von der Hauptmatrix unterscheidenden submikronen Matrix, welche mit einem aktiven Metallelement dotiert ist, besteht, wobei das aktive Element nicht auf der Hauptmatrix vorhanden ist, und
- eine leitende Ummantelung (11), welche mit dem Kern in Beruhrung ist,
**dadurch gekennzeichnet, dass** es umfasst:
- Einen Schritt des Herstellens der besagten Partikel (1a, 1b), welcher unter der chemischen Synthese und der Laserablation gewählt wird,
- einen Schritt des Beimischens der besagten Partikel in eine Vorstufe (10') der Hauptmatrix,
und dass die Größe der besagten Partikel (1a, 1b) kleiner als 20 nm ist.

8. Verfahren zur Herstellung eines Wellenleiters nach Anspruch 7, **dadurch gekennzeichnet, dass** die chemische Synthese einen Schritt des Herstellens vom Typ Sol-Gel von organometallischen Vorstufen (12) der besagten Partikel (1a), welche das aktive Element (4) enthalten, gefolgt von einem Schritt des Bildens von organometallischen Tröpfchen durch Verdampfung der organometallischen Vorstufe, und von einem Schritt der Transformation der Tröpfchen in Partikel (1a) durch Abtrennen der organischen Elemente umfasst.

9. Verfahren zur Herstellung eines Wellenleiters nach Anspruch 8, **dadurch gekennzeichnet, dass** das Herstellungsverfahren vom Typ Sol-Gel umfasst:
- Das Mischen, in einem Lösungsmittel (3) vom Typ Alkohol, einer Verbindung, welche das Metall (4) eines aktiven Elements enthält, mit Monomeren vom Typ Sol-Gel (5), welche jeweils eine an ein erstes Metallalkoxid gebundene komplexierende organische Verbindung umfassen,
- das Bilden von organometallischen Kernen (6) durch eine Kompkexierung des Metalls des aktiven Elements,
- das Umwandeln der organometallischen Kerne in organometallische Verbindungen (8) durch Zugabe von zweiten Metallalkoxiden (7), welche mit den ersten Alkoxiden reagieren
- das Vernetzen der Struktur der besagten Verbindungen durch Reaktion vom Typ einer intramolekularen Sol-Gel-Reaktion, um die besagten organometallischen Vorstufen (12) zu bilden.

10. Verfahren zur Herstellung eines Wellenleiters nach Anspruch 9, **dadurch gekennzeichnet, dass:**
- Die ersten und zweiten Metallalkoxide unter den Silizium- und den Aluminiumalkoxiden gewählt werden,
- die komplexierende organische Verbindung unter den elektronenspendenden Atomen oder Atomgruppen und vorzugsweise unter den Aminen, den Acetaten, den Beta-Diketonaten, den Thiolen und den Ethern gewählt wird.

11. Verfahren zur Herstellung eines Wellenleiters nach Anspruch 7, **dadurch gekennzeichnet, dass** die Laserablation einen Schritt des Ausstoßens von Atomen durch Bestrahlung eines mit den besagten aktiven Elementen dotierten Zielmoleküls (17), welches unter den Zielmolekülen mit einer merklich mit den besagten Partikeln (1b) identischen Zusammensetzung (1 b) gewählt wird, gefolgt von einem Schritt des Bildens der besagten Partikel durch Kondensation unter Gasdruck (18) der ausgestoßenen Atome, umfasst.

12. Verfahren zur Herstellung eines Wellenleiters nach Anspruch 11, **dadurch gekennzeichnet, dass** die Zielmoleküle (17) unter den dotieren Metalloxiden und den dotierten Metallfluoriden und vorzugsweise mit Erbium-Ionen dotierten Al₂O₃, mit Thulium-Ionen dotierten Sb₂O₃, mit Erbium-Ionen dotierten LaF₃, mit Erbium-Ionen dotierten Y₂O₃ und dotierten ZnO gewählt werden.

13. Verfahren zur Herstellung eines Wellenleiters nach einem der Ansprüche 7 bis 12, **dadurch gekennzeichnet, dass** der Schritt des Beimischens der Partikel (1a, 1b) unter einem Schritt des Imprägnierens der besagten Vorstufe der Hauptmatrix, einem Schritt der Ablagerung durch Verdampfung auf der besagten Vorstufe und einem Schritt vom Typ Mischen in der Vorstufe gewählt wird.

14. Verfahren zur Herstellung eines Wellenleiters nach einem der Ansprüche 7 bis 13, **dadurch gekennzeichnet, dass** es einen Schritt des Bildens der besagten Vorstufe (10') der Hauptmatrix durch eine Ablagerung auf mindestens einem Teil der Ummantelung (11), vorzugsweise unter den modifizierten Ablagerungen durch Verdampfung und den Ablagerungen durch Zentrifugation gewählt, umfasst.
